(19) Europäisches Patentamt
European Patent Office
Office européen des brevets

(11) **EP 2 675 157 A1**

(12) **EUROPEAN PATENT APPLICATION**

(43) Date of publication:
**18.12.2013 Bulletin 2013/51**

(51) Int Cl.:
**H04N 7/15** *(2006.01)*   **G06T 15/50** *(2011.01)*

(21) Application number: **12172112.0**

(22) Date of filing: **15.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent
75007 Paris (FR)**

(72) Inventors:
• **Fadili, Moulay
  92707 COLOMBES (FR)**
• **Fagadar-Cosma, Mihai
  2018 ANTWERP (BE)**

(74) Representative: **Loyer & Abello
9, rue Anatole de la Forge
75017 Paris (FR)**

(54) **A method for generating an immersive video of a plurality of persons**

(57)    A method for generating an immersive video of a plurality of persons (P1, P2, P3) comprising the steps of:
- determining a position for each person (P1, P2, P3) in a scene,
- modifying a plurality of video streams representing each one a person,
- generating an output video stream showing the scene comprising the plurality of persons in the scene and comprising the modified video streams (15) of the persons,

wherein the step of modifying the video stream comprises the steps of:
- determining an initial illumination vector (L1, L2, L3) of the person, the initial illumination vector representing the mean light direction,
- determining the final illumination vector (LN 1, LN2, LN3) for the person as a function of the position of the associated person in the scene, the final illumination vector representing the mean direction of a virtual light,
- modifying the video stream of the person as a function of the angle between the final illumination vector and the initial illumination vector.

FIG.1

**Description**

**Field of the invention**

The invention relates to methods for generating an immersive video of a plurality of persons, in particular to methods of video processing in a multi-participant video-conferencing system.

**Background**

Along with the increase of bandwidth capabilities in communication systems, video communication systems have become increasingly popular in both business and residential applications. Indeed, in the case of geographically distributed team collaboration, these systems avoid the travelling of the team collaborators and increase flexibility.
Videoconferencing technologies use video and audio communication to allow a plurality of people to communicate at a same time, for instance for meeting activities. Furthermore, besides the audio and visual transmission of meeting activities, videoconferencing technologies can be used to share documents and display information.
In order to improve a natural human centered communication between the participants of a videoconference, one challenge for video conferencing systems is to provide an immersive aspect to the provided videoconferences. For that purpose, immersive Video conferencing systems for instance based on the principle of shared virtual table environment were proposed. One example of this type of a system based on this principle is presented in "An immersive 3D video-conferencing system using shared virtual team user environment" by P. Kauf and O. Schreer in Proc. Of the 4th International Conference on Collaborative Environments, pp.105-112, 2002. This 3D video conference provides a representation of participants in a shared virtual meeting environment and relies on a multiple video capture on each participant of the video conference.
More precisely, each participant is captured by a multiple camera set-up in order to generate multi-view images from which a 3D video representation of the participant is computed.
All the 3D representations of the participants are then grouped around a virtual table in a virtual conference environment. A virtual camera can then render a view of the virtual conference according to each participant point of view by placing a virtual camera as a function of the point of view of each participant.

**Summary**

In an embodiment, the invention provides a method for generating an immersive video of a plurality of persons, the method comprising:

- a step of determining a position for each person in a scene,
- a step of modifying a plurality of video streams representing each one a person, the modification being made as a function of a final illumination vector,
- a step of generating an output video stream showing the scene comprising the plurality of persons at their respective positions in the scene, the output video stream comprising the modified video streams of the persons,

wherein the step of modifying the video stream of a person comprises:

- a step of determining an initial illumination vector of the person, the initial illumination vector representing a mean light direction associated to the corresponding video stream,
- a step of determining the final illumination vector for the person as a function of the position of the associated person in the scene, the final illumination vector representing the mean direction of a virtual light,
- a step of determining an angle between the final illumination vector of the person and the initial illumination vector of the person
- a step of modifying the video stream of the person as a function of the angle between the final illumination vector of the person and the initial illumination vector of the person so that the person appears to be illuminated by the virtual light.

According to embodiments, such device can comprise one or more of the features below.
In embodiments of the method, the method further comprises a step of determining the state of a person, the state representing the activity of a person in a video conference, and wherein the position of a person is determined as a function of the state of said person.
In embodiments of the method, the method further comprises a step of extracting the video stream of a person from a captured video stream, the step of extracting the video stream of the person comprising a step of identifying a silhouette of the person and a background in the captured video stream, and a step of removing the background from the captured video stream so as to obtain the video stream of the person.

In embodiments of the method, the video stream of each person is comprised in a corresponding captured video stream, the captured video stream comprising a background, the video stream of the person being defined by the person silhouette,

wherein the modification is further made on the background of the captured video stream,

and wherein the method further comprises a step of extracting the modified video streams of each person from each modified captured video stream, the step of extracting the modified video streams of a person comprising:

a step of identifying the modified silhouette of the person and the modified background in the modified captured video stream, and

a step of removing the modified background from the modified captured video stream so as to obtain the modified video stream of the person.

In embodiments of the method, the initial illumination vector represents the mean light direction in the video stream of the person.

In embodiments of the method, the initial illumination vector represents the mean light direction in the captured video stream.

In embodiments of the method, the step of generating an output video stream comprises a step of generating a shadow on the scene, the step of generating the shadow being made as a function of the final illumination vector, the shadow representing a viewer of the video.

In embodiments of the method, the step of modifying the video stream comprises a step of computing a final luminance map for the video stream of the person as a function of said angle and a step of substituting the final luminance map for an initial luminance map of the video stream of the person.

In embodiments of the method, the step of computing a final brightness map comprises a step of computing an intermediate luminance map as a function of said angle, and a step of blending the intermediate luminance map as a function of the initial luminance map and the intermediate luminance map so as to obtain the final luminance map.

In embodiments of the method, the determination of the initial illumination vector and the modification of video stream is made for each frame of the video streams of the persons.

In embodiments of the method, the step of determining the initial mean illumination vector comprises a step of determining a first initial mean illumination vector for a first frame, and a step of determining a second initial mean illumination vector for a second frame as a function of the first illumination vector.

In embodiments of the method, the generation of an immersive video stream comprises a step of integrating a virtual background in the output video stream.

In an embodiment, the invention also provides a computer program comprising computer-executable instructions that perform the above-mentioned method when executed, and a computer that comprises said computer program.

In an embodiment, the invention also provides a video conference server comprising:

- a plurality of inputs ports for receiving a plurality of video streams representing each one a person, wherein the person is a participant in a videoconference,
- a video processing module for generating an immersive video of a plurality of the participants,

wherein the video processing module comprises:

- means for determining a position for each participant in a scene,
- means for determining an initial illumination vector of a participant, the initial illumination vector representing a mean light direction associated to the corresponding video stream,
- means for determining the final illumination vector for said participant as a function of the position of the associated participant in the scene, the final illumination vector representing the mean direction of a virtual light,
- means for determining an angle between the final illumination vector of the participant and the initial illumination vector of the participant,
- means for modifying the video stream of the participant as a function of the angle between the final illumination vector of the participant and the initial illumination vector of the participant so that the participant appears to be illuminated by the virtual light and
- means for generating an output video stream showing the scene comprising the plurality of participant at their respective positions in the scene.

The invention originates from the observation that each participant of a videoconference may be subject to its particular light conditions. Therefore, when the videoconferencing system captures silhouettes of the participants and displays these silhouettes in a scene on a video screen to a participant, the displayed scene may then exhibit light incoherencies as the light conditions will appear to be different for each participant in the same scene.

Therefore, an idea on which the invention is based is to provide immersive video by modifying the captured silhouette of the participants so as to simulate uniform light conditions in the displayed scene.

Aspects of the invention are based on the idea of modifying the captured silhouette as a function of the position of the participant in the immersive video.

Aspects of the invention are based on the idea of providing a videoconference system, wherein the participants are displayed on a shared scene with uniform light conditions, which enforces, for the participants, the feeling of a seamless and natural environment that brings together the conference participants.

**Brief description of the drawings**

These and other aspects of the invention will be apparent from and elucidated with reference to the embodiments described hereinafter, by way of example, with reference to the drawings.

Figure 1 is a schematic representation of a general architecture of a system in which an embodiment of the invention may be implemented.

Figures 2 is a schematic representation of a frame of a videoconference wherein light correction is applied.

Figures 3 is a schematic representation of a frame of a videoconference wherein light correction is not applied.

Figure 4 is a flowchart illustrating the method employed to render the frame of figure 2.

Figure 5 is a flowchart representing the method used in the figure 4 in order to correct the luminance information of a silhouette.

**Detailed description of the embodiments**

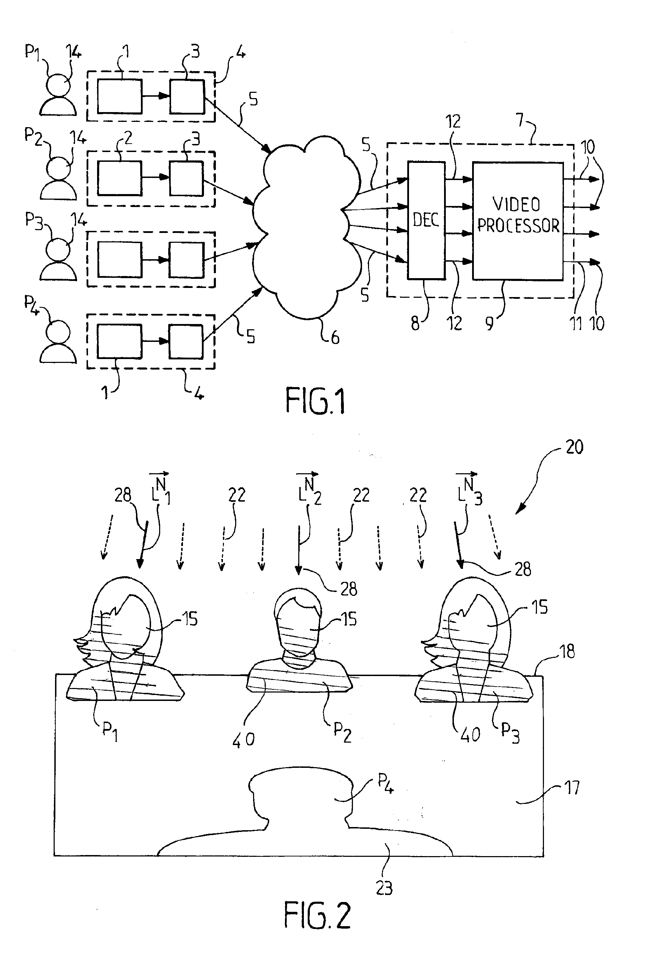

Figure 1 illustrates a general video conferencing system architecture in the case wherein four attendees 14 are participating to a videoconference.

The four participants P1, P2, P3 and P4 are participating to the video conference each one through a corresponding communication terminal 4 which may be for instance a personal computer, a mobile phone or a smartphone. The participants P1, P2, P3 and P4 and their communication terminals 4 are physically situated in different geographical locations.

Each participant 14 Pi receives a videoconference stream 11 comprising a video showing a corresponding scene SCi in which the other participants 14 are present.

For that purpose, each communication terminal 4 comprises a camera 1 which captures digital video frames of one of the corresponding participant 14. For instance, the camera 2 captures video frames of the participant P2.

For each camera 1, the captured video frames are encoded by an encoder 3 as a video stream 5 in the corresponding communication terminal 4. The communication terminal 4 then transmits the video stream 5 to a server 7 through a network 6. Therefore, the server 7 receives four independent videostreams VS1, VS2, VS3 and VS4 corresponding respectively to the participants P1, P2, P3 and P4.

The server 7 comprises a decoder 8 which decodes each video stream 5 independently and transmits the four decoded video streams 12 to a video processor module 9.

The video processor module 9 extracts the silhouette of each participant 14 from the decoded video streams 28. The video processor module 9 then combines the extracted silhouettes in four virtual scenes SCi and generates herewith four different videoconference streams 10.

Each videoconference stream 10 is destined and transmitted to one specific participant 14. Indeed, each scene represents the sight of a specific participant 14 in the virtual environment.

For instance, the videoconference stream 11 is destined to the participant P4 and comprises video frames representing a scene SC4. The scene SC4 shows the silhouettes 15 of the participant P1, P2 and P3 in the foreground, as it is illustrated in figure 2 which is a schematic representation of a frame 16 of the videoconference stream 10. Similarly, the frames of the videoconference stream 11, transmitted to P2, represent a scene SC2 which includes the participant's P1, P3 and P4 silhouettes 15.

As it may be observed in figure 2, three half silhouettes 15 of the participants P1, P2 and P3 are juxtaposed in the frame 16 rendered by the video processor module in order to illustrate the scene SC4 viewed by P4. The video processor module 9 displays the silhouettes 15 in a same virtual environment which is represented by a surface 17 which spreads over until the horizon 18.

The silhouettes 15 of participants P1 and P3 are situated on the sides of the frame 16 and are represented in bigger scale than the silhouette 15 of P2 which is in the center of the frame 16. Moreover, the silhouette 15 of participant P2 is placed slightly on a higher level than the participants P1 and P3. This disposition gives to a person watching the frame 16 the impression of deepness of in the frame, and gives the impression that the participants P1, P2 and P3 are placed in front of the viewer as a semi circle.

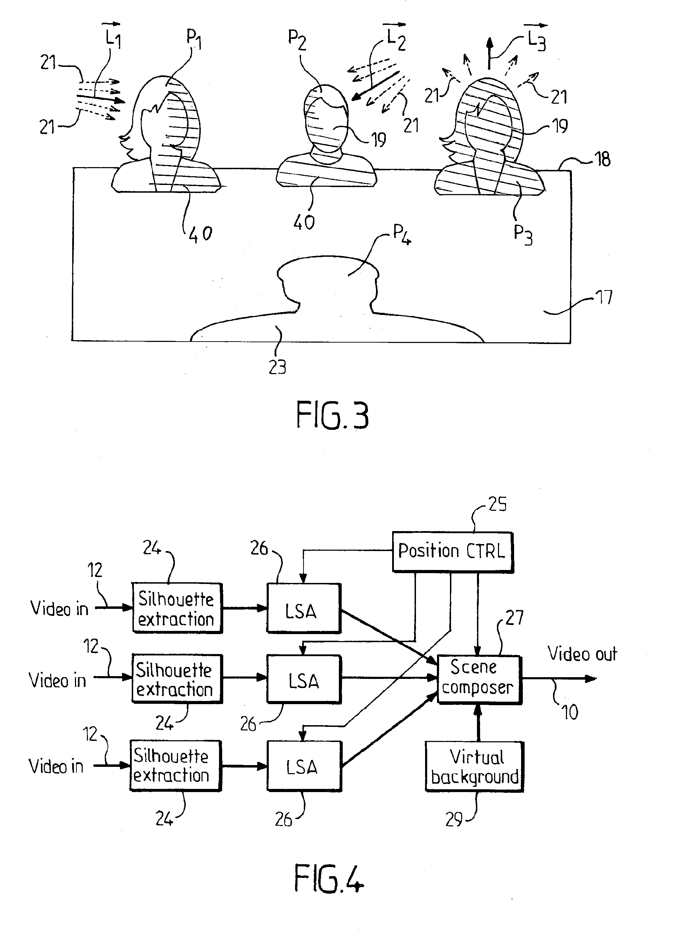

In figures 2 and 3, the hatched areas 40 represent schematically the shaded areas on the silhouettes. As it may be observed in figure 2, the light conditions in the frame 16 are uniform. These uniform light conditions are provided by the processing of the extracted participants silhouettes 19 in the video processor module 9.

Indeed, as the participants Pi are in different geographical locations, they are subject to different light conditions. Indeed, the light conditions notably depend on the position and orientation of the light source, the intensity of the light source, the position and orientation of the camera etc. Therefore, the videos of the participants Pi captured by the video cameras 1 present different general luminance profiles.

As an example, figure 3 represents a frame 20 of a videoconference stream which may be provided by a videoconference system in which no light correction is applied. In this example, the same videos of the participants 14 are captured by the videoconference system and the extracted silhouette of a participant Pi is directly shown without light correction. The general disposition in the resulting frame 20 is similar to the disposition of the frame 16.

Each participant Pi is captured by a video camera in an environment comprising its own light conditions. As a consequence, the extracted silhouette 19 of participant P1 appears to be illuminated from the left, the participant P2 appears to be illuminated from the right and participant P3 is illuminated from a light source situated behind himself. The direction of the light corresponding to each silhouette P1, P2 and P3 is indicated in figure 2 by the arrows 21.

These differences between the light conditions of each participant cause different luminance profiles on each silhouette 29. Therefore, the person watching the videoconference will feel an impression of incoherence. This incoherence induces the feeling of artificiality to the participants and degrades the immersive experience due to the presence of inconsistent scene lights.

In order to correct these incoherencies, the video processor module 9 corrects the light appearance on the participants P1, P2, P3 and P4 when generating the videoconference streams 10, as it is observable in figure 2. The reflecting surfaces on the modified silhouette 15 of each participant are then similar, which gives the impression to the watcher that the light orientation, illustrated by the arrows 21, is uniform, in opposition to figure 3. More precisely, in figure 2 a virtual light source is virtually placed by the video processor module 9 behind the viewer. Moreover, the light intensity seems also homogeneous on each participant P1, P2 and P3.

The video processor module 9 further renders a shadow 19 on the bottom of the frame. The shadow 19 represents the participant P4 who is watching the picture, in order to give the impression to the participant P4 to be in the same environment so as to accentuate the immersive feeling of the videoconference. This shadow 23 deepens the impression that the light source is behind the viewer.

The functioning of the video processor module 9 for the scene SC4 will now be described with reference to figure 4.

Each decoded video stream 12 is provided to a silhouette extraction module 24 which analyses each frame of the video stream 12 so as to perform a foreground and background segmentation. In other words, the silhouette extraction module 24 extracts the shape of the participants P1, P2, P3 as a silhouette 19 from the frames captured by the corresponding video camera 1 and removes the background of the frame. Each extracted silhouette 19 is then sent to a corresponding light simulation module 26. This extraction may be performed for instance by a central converging algorithm which manages and combines the results of several different algorithms such as movement detection algorithms, contour detection algorithms, face detection algorithms or morphologic statistical models, during several frames. With the results provided by these algorithms the converging algorithm converges to the silhouette of the participant in the captured video stream 12 during the succession of frames. However, the silhouette 19 extraction may also be fulfilled using a stereoscopic video capture.

Alongside, a position control module 24 determines the positions of the participants 14 in each different scene SCi destined to a corresponding participant Pi. For that purpose, the position control module 24 determines the position of each participant Pj, for each value of j different from i, in each scene SCi. Furthermore, the position control module 24 determines the virtual light conditions for each of the scenes SCi.

The position of the participant is determined as a function of a fixed location of the participants P1, P2, P3 and P4 in a virtual environment consisting here in a virtual table around which the participants are placed. Therefore, the participant P3 is at the right of the participant P4 and participant P2 is at the left of the participant P4.

In other embodiments, the position of a participant Pj may be dependant of the participant's 14 states. For instance, the videoconference system may detect that a participant is talking and therefore position control module 24 sets this participant in the foreground of each scene. In variants, the participant presenting a document may also be set in the foreground or in the middle of the scene.

Furthermore, in other embodiments, the light source may be placed at any other position, and may also further be determined by each participant 14 for its own scene SCi as a function of his preferences.

The position control module then transmits the data concerning the positions of the participants Pj and the light conditions to the light simulation modules 26 and scene composers 27.

For instance, in figure 4 the position control module may send Cartesian coordinates corresponding to the participant P1, P2 and P3 and Cartesian coordinates for the position of a virtual punctual source.

The extracted silhouette 19 of each participant is then analyzed in a corresponding light simulation module 26 which then corrects the texture of each silhouette 15 in order to fix the issue of lighting incoherencies for the virtual scene SC4. This correction is made as a function of the position of the participant 14 and the position of the simulated light source.

Indeed, as the simulated light originates from a punctual light source, the incidence of the light on a participant Pj depends on the position of said participant Pj in the scene SCi. The orientation of the simulated light is represented by the vectors 22 in figure 2. More precisely, the light vectors 22 corresponding to participant P3 are slightly oriented to the right and the light vectors 22 corresponding to participant P2 are slightly oriented to the right.

Therefore, the light simulation module determines a mean direction LNj of the incident light for each participant Pj, which are each one illustrated by an arrow 28 in figure 2. The light simulation module 26 modifies the silhouette 19 according to this mean direction LNj so as to provide to the scene composer 27 the silhouettes 15.

According to the position of the participants 14 in the virtual environment, the scene composer 26 renders the individual scene SC4. For that purpose, a virtual background module 29 provides a background to the scene composer 27. The scene composer then combines the silhouettes with the background according to the position of the participants determined by the position control module 24 for the scene SC4.

The functioning of the video processor module 9 is similar for the generation the other scenes SC1 SC2 and SC3 destined for the other participants P1, P2 and P3. However, the coordinates provided by the position control module 25 for one participant Pj differs between two different scenes SCi because the set of participant Pj shown in each different scene SCi varies as a function of the recipient Pi of the scene SCi. As a consequence, different light conditions should be applied to one corresponding initial silhouette 19 by the light simulation module. Therefore the light simulation modules 26 may generate several different corrected silhouettes 15 for a same initial silhouette 19.

In the video processor functioning described in reference to figure 4, the light simulation module 26 modifies the silhouette 19 of the participant after the extraction from the initial video streams 12. However, in other embodiments, the light simulation module 26 may modify the light conditions directly on the initial video stream 12 and the silhouette extraction may be fulfilled after the light simulation module 26.

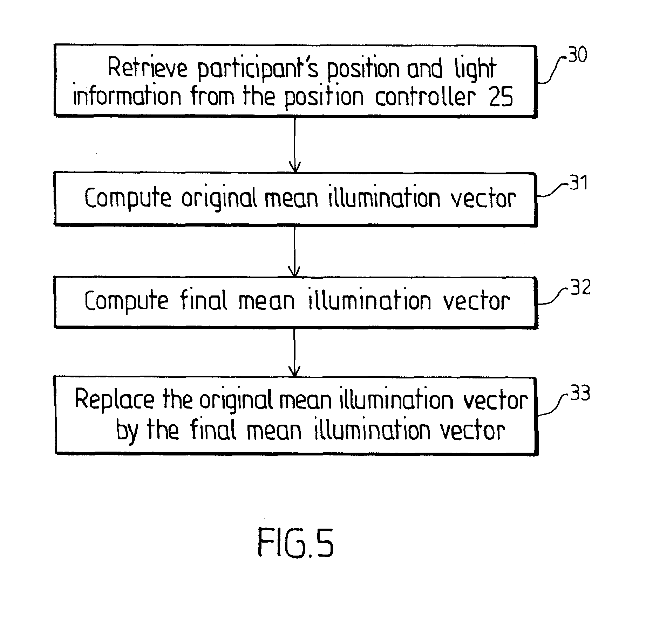

The process executed by the light simulation module 26 in figure 4 for the initial silhouette 19 of the participant P1 will now be described in reference to figure 5.

In a first step 30 the light simulation module 26 retrieves the position of the participant P1 in the scene SC4 and the data about the simulated light source in the scene SC4 from the position controller 25.

In a second step 32 the light simulation module 26 determines the original mean illumination vector LI, illustrated in figure 3, in the silhouette 19 extracted by the silhouette extractor 24.

In a further step 32, the light simulation module 26 further calculates a final mean illumination vector LN 1 from the information about the position of the virtual light source. The final mean illumination vector LN1 describes a uniform parallel light generated from an infinite light source located above and behind participant P4.

In a modification step 33, the light simulation module 26 modifies the silhouette 19 data so as to obtain light conditions in the corrected silhouette 15 which simulates the mean final vector LN4.

This process is executed iteratively by the light simulation module 26 for each silhouette 19 of a participant in a scene.

In other embodiments, the computing of the original illumination vector may be fulfilled before the extraction of the silhouette 19 from the video stream 12 and the correction of the silhouette 19 may be fulfilled after the extraction of the silhouette 19.

In order to compute the original mean illumination vector L1 in step 32, the light simulation module 26 first converts the silhouette 19 digital image into a YUV color space, where a Y-map represents the normalized luminance information in the image. In other words Y represents the brightness map representing the brightness information for each pixel in the image and U and V represents the color information maps, and more precisely the chrominance for each pixel of the digital image.

The light simulation module 26 then represents the luminance of each pixel of the picture as a vector $p = [x, y, z]$, where $(x, y)$ represents the Cartesian image coordinates of the pixel in the picture and $z = Y(x,y)$ represents the pixel luminosity.

For each vector corresponding to a pixel R, the light simulation module 26 computes a local luminance vector Lp as a function of the luminance z of the four neighbor pixels N, S, E and W. More precisely, if the current reference pixel R is at coordinates $(x, y)$, the neighbor pixel N is at $(x, y-1)$, the neighbor pixel S is at $(x, y+1)$, the neighbor pixel E is at $(x+1, y)$ and the neighbor pixel N W is at $(x-1, y)$.

In order to compute the local luminance vector Lp, the light simulation module 26 computes the normal vectors of four triangles, wherein the vertices of the triangle are specified by the coordinates $(x, y, z)$ of the vector of the reference pixel R and the coordinates $(x, y, z)$ of two neighbor pixels. More precisely, the light simulation module 26 computes the normal vectors of the triangles (R,E,N), (R,N,W), (R,W,S) and (R,S,E). The local luminance vector Lp is then computed as the sum of the four normal vectors.

Once the local vectors Lp are computed for each pixel of the silhouette, the light simulation module 26 computes the global illumination vector L1 as the sum of all local luminance vectors: $Lg1 = \Sigma_p Lp$, normalized as following L1 = Lg1/|Lg1|.

In order to modify the silhouette data in step 33, the light simulation module 26 computes the angle θ between the mean illumination vector L1 and the vector LN1 as $\theta = \arccos \frac{L1 \cdot LN4}{|L1| \cdot |LN4|}$. With this angle, a intermediate luminance map Y* is computed by calculating, for each pixel: $Y^*(x,y) = Y(x,y) \cdot \cos \frac{\theta}{2}$. The half-value of the angle is used in order to avoid negative cosine values.

A final luminance map $Y^N$ is then calculated by applying a blending filter notably as a function of the original map Y and the intermediate map Y*. For that purpose a median luminance value $I_{med}$ is computed from of the original luminance map Y. Then, for each pixel, when $Y(x,y) \geq I_{med}$, which means on lighter pixels, the light simulator module performs a screen blend mode:

$$Y^N(x,y) = 1 - (1 - Y(x,y)) \cdot (1 - Y^*(x,y))$$

When Y(x,y)<Imed, which means on darker pixels, the light simulation module performs a multiply blend mode:

$$Y^N(x,y) = Y(x,y) \cdot Y^*(x,y)$$

Finally, the original map Y in the silhouette digital image is replaced by the final map $Y^N$ in order to provide the light corrected image of the silhouette.

The above described system permits to obtain an economical immersive video conference. Indeed, the fact that a distant server makes the video processing combined to the fact that the method can be applied with hardware such as web cameras or embedded cameras in mobile devices such as laptops, smartphones or tablet PC, which are common in the marketplace provides an economical immersive video conference system.

Moreover the method is very flexible and may be used by the user in different places when moving as it does not need a complex room setup, multiple video capture or large displays.

Furthermore the video processing is fulfilled on the server 7, therefore, any user with a network device and camera enabled device can participate to the videoconference without any additional specific software or hardware modules.

In embodiments, the silhouette extraction may be fulfilled by the communication terminals 4. As a consequence, less important bandwidths are required between the communication terminals 4 and the server 7 during the videoconference.

In embodiments, the light correction process may be implemented using a graphical processing unit (GPU) acceleration, which increases the performances and decreases the computing processing unit (CPU) use and decreases the power consumption.

In embodiments of the light simulation module, the light simulation module may take into account the light correction fulfilled on previous frames of a participant in order to calculate the present light correction for the silhouette 19 of said participant. More precisely, a temporal smoothing may be performed so as to reduce the computation time for each silhouette 19.

The invention is not limited to the described embodiments. The appended claims are to be construed as embodying all modification and alternative constructions that may be occurred to one skilled in the art, which fairly fall within the basic teaching here, set forth. The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

In the claims, any reference signs placed between parentheses shall not be construed as limiting the scope of the claims.

**Claims**

1. A method for generating an immersive video of a plurality of persons (P1, P2, P3), the method comprising:

   - a step of determining a position for each person (PI, P2, P3) in a scene,
   - a step of modifying a plurality of video streams (19) representing each one a person (PI, P2, P3), the modification being made as a function of a final illumination vector (LN1, LN2, LN3),
   - a step of generating an output video stream (10) showing the scene comprising the plurality of persons at their respective positions in the scene, the output video stream comprising the modified video streams (15) of the persons,

   wherein the step of modifying the video stream of a person comprises:

   - a step (31) of determining an initial illumination vector (L1, L2, L3) of the person, the initial illumination vector representing a mean light direction associated to the corresponding video stream,
   - a step (32) of determining the final illumination vector (LN 1, LN2, LN3) for the person as a function of the position of the associated person in the scene, the final illumination vector representing the mean direction of a virtual light,
   - a step of determining an angle between the final illumination vector of the person and the initial illumination vector of the person
   - a step (33) of modifying the video stream of the person as a function of the angle between the final illumination vector of the person and the initial illumination vector of the person so that the person appears to be illuminated by the virtual light.

2. A method according to claim 1, wherein the method further comprises a step of determining the state of a person (P1, P2, P3), the state representing the activity of a person in a video conference, and wherein the position of a person is determined as a function of the state of said person.

3. A method according to claim 1 or 2, wherein the method further comprises a step of extracting the video stream of a person (19) from a captured video stream (12), the step of extracting the video stream of the person comprising a step of identifying a silhouette of the person and a background in the captured video stream, and a step of removing the background from the captured video (12) stream so as to obtain the video stream of the person.

4. A method according to claim 1 or 2, wherein the video stream (19) of each person is comprised in a corresponding captured video stream (12), the captured video stream comprising a background, the video stream of the person being defined by the person silhouette,
   wherein the modification is further made on the background of the captured video stream (12),
   and wherein the method further comprises a step of extracting the modified video streams of each person (15) from each modified captured video stream,
   the step of extracting the modified video streams of a person comprising:

   a step of identifying the modified silhouette of the person and the modified background in the modified captured video stream, and
   a step of removing the modified background from the modified captured video stream so as to obtain the modified video stream of the person (15).

5. A method according to claim 1 to 4, wherein the initial illumination vector (L1, L2, L3) represents the mean light direction in the video stream of the person (19).

6. A method according to claim 3 or 4, wherein the initial illumination vector (L1, L2, L3) represents the mean light direction in the captured video stream (12).

7. A method according to anyone of claims 1 to 6, wherein the step of generating an output video stream comprises a step of generating a shadow on the scene (23), the step of generating the shadow being made as a function of the final illumination vector (LNI, LN2, LN3), the shadow representing a viewer of the video.

8. A method according to anyone of claims 1 to 7, wherein the step of modifying the video stream (19) comprises a step of computing a final luminance map for the video stream of the person as a function of said angle and a step of substituting the final luminance map for a initial luminance map of the video stream of the person (19).

9. A method according to claim 8, wherein the step of computing a final brightness map comprises a step of computing an intermediate luminance map as a function of said angle, and a step of blending the intermediate luminance map as a function of the initial luminance map and the intermediate luminance map so as to obtain the final luminance map.

10. A method according to anyone of claims 1 to 9, wherein the determination of the initial illumination vector (L1, L2, L3) and the modification of the video stream (19) is made for each frame of the video streams of the persons.

11. A method according to anyone of claims 1 to 10, wherein the step of determining the initial mean illumination vector comprises a step of determining a first initial mean illumination vector (L1, L2, L3) for a first frame, and a step of determining a second initial mean illumination vector (LI , L2, L3) for a second frame as a function of the first illumination vector.

12. A method according to anyone of claims 1 to 11, wherein the generation of an immersive video stream comprises a step of integrating a virtual background (17) in the output video stream.

13. A computer program comprising computer-executable instructions that perform the method in accordance with any one of claims 1 to 12 when executed.

14. A computer that comprises a computer program of claim 10.

15. A video conference server comprising:

- a plurality of inputs ports for receiving a plurality of video streams (19) representing each one a person (P 1, P2, P3, P4), wherein the person is a participant in a videoconference,
- a video processing module for generating an immersive video of a plurality of the participants (P1, P2, P3, P4),

wherein the video processing module comprises:

- means for determining a position for each participant (PI, P2, P3, P4) in a scene,
- means for determining an initial illumination vector (L1, L2, L3) of a participant, the initial illumination vector representing a mean light direction associated to the corresponding video stream,
- means for determining the final illumination vector (LNI, LN2, LN3) for said participant as a function of the position of the associated participant in the scene, the final illumination vector representing the mean direction of a virtual light,
- means for determining an angle between the final illumination vector of the participant and the initial illumination vector of the participant,
- means for modifying the video stream of the participant as a function of the angle between the final illumination vector of the participant and the initial illumination vector of the participant so that the participant appears to be illuminated by the virtual light, and
- means for generating an output video stream (10) showing the scene comprising the plurality of participant at their respective positions in the scene.

FIG.1

FIG.2

FIG.3

FIG.4

Retrieve participant's position and light
information from the position controller 25 — 30

Compute original mean illumination vector — 31

Compute final mean illumination vector — 32

Replace the original mean illumination vector
by the final mean illumination vector — 33

FIG.5

## EUROPEAN SEARCH REPORT

Europäisches
Patentamt
European
Patent Office
Office européen
des brevets

**Application Number**

EP 12 17 2112

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 980 697 B1 (BASSO ANDREA [US] ET AL) 27 December 2005 (2005-12-27) * the whole document * | 1-15 | INV. H04N7/15 G06T15/50 |
| A | SAE-WOON RYU ET AL: "Tangible video teleconference system using real-time image-based relighting", IEEE TRANSACTIONS ON CONSUMER ELECTRONICS, IEEE SERVICE CENTER, NEW YORK, NY, US, vol. 55, no. 3, 1 August 2009 (2009-08-01), pages 1162-1168, XP011277772, ISSN: 0098-3063, DOI: 10.1109/TCE.2009.5277971 * the whole document * | 1-15 | |
| A | EISERT P: "Immersive 3-D Video Conferencing: Challenges, Concepts, and Implementations", SPIE PROCEEDINGS, THE INTERNATIONAL SOCIETY FOR OPTICAL ENGINEERING - SPIE, BELLINGHAM, WASHINGTON, USA, vol. 5150, 8 July 2003 (2003-07-08), pages 69-79, XP002433012, ISSN: 0277-786X, DOI: 10.1117/12.509896 * the whole document * | 1-15 | |
| A | US 6 288 721 B1 (DONOGHUE PATRICK [US] ET AL) 11 September 2001 (2001-09-11) * column 6, line 53 - column 8, line 15 * | 1-15 | |

-/--

**TECHNICAL FIELDS SEARCHED (IPC)**

H04N
G06T

The present search report has been drawn up for all claims

| Place of search | Date of completion of the search | Examiner |
|---|---|---|
| Berlin | 19 March 2013 | Blais, Denis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 12 17 2112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHEN WEN ET AL: "Face relighting with radiance environment maps", PROCEEDINGS / 2003 IEEE COMPUTER SOCIETY CONFERENCE ON COMPUTER VISION AND PATTERN RECOGNITION, 18 - 20 JUNE 2003, MADISON, WISCONSIN; [PROCEEDINGS OF THE IEEE COMPUTER CONFERENCE ON COMPUTER VISION AND PATTERN RECOGNITION], LOS ALAMITOS, CALIF. [U.A, vol. 2, 18 June 2003 (2003-06-18), pages 158-165, XP010644669, DOI: 10.1109/CVPR.2003.1211466 ISBN: 978-0-7695-1900-5 * the whole document * | 1-15 | |
| A | US 2011/007073 A1 (BELT HARM JAN WILLEM [NL] ET AL) 13 January 2011 (2011-01-13) * abstract * | 1-15 | |
| A,D | PETER KAUFF ET AL: "An Immersive 3D Video-Conferencing System using Shared Virtual Team User Environments", PROCEEDINGS OF THE 4TH. INTERNATIONAL CONFERENCE ON COLLABORATIVE VIRTUAL ENVIRONMENTS. CVE 2002. BONN, GERMANY, SEPT. 30 - OCT. 2, 2002; [PROCEEDINGS OF THE INTERNATIONAL CONFERENCE ON COLLABORATIVE VIRTUAL ENVIRONMENTS], NEW YORK, NY : ACM, US, no. 4TH, 30 September 2002 (2002-09-30), pages 105-112, XP002633305, ISBN: 978-1-58113-489-6 * the whole document * | 1-15 | **TECHNICAL FIELDS SEARCHED (IPC)** |

The present search report has been drawn up for all claims

| Place of search | Date of completion of the search | Examiner |
|---|---|---|
| Berlin | 19 March 2013 | Blais, Denis |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P04C01)

**ANNEX TO THE EUROPEAN SEARCH REPORT
ON EUROPEAN PATENT APPLICATION NO.**                      EP 12 17 2112

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2013

| Patent document cited in search report | Publication date | Patent family member(s) | Publication date |
|---|---|---|---|
| US 6980697 B1 | 27-12-2005 | US 6980697 B1<br>US 7231099 B1<br>US 7805017 B1<br>US 2011002508 A1<br>US 2012069139 A1 | 27-12-2005<br>12-06-2007<br>28-09-2010<br>06-01-2011<br>22-03-2012 |
| US 6288721 B1 | 11-09-2001 | CA 2313267 A1<br>EP 1067478 A2<br>US 6288721 B1 | 07-01-2001<br>10-01-2001<br>11-09-2001 |
| US 2011007073 A1 | 13-01-2011 | CN 101971211 A<br>EP 2255339 A1<br>JP 2011513871 A<br>KR 20110002025 A<br>RU 2010141561 A<br>TW 200943225 A<br>US 2011007073 A1<br>WO 2009112967 A1 | 09-02-2011<br>01-12-2010<br>28-04-2011<br>06-01-2011<br>20-04-2012<br>16-10-2009<br>13-01-2011<br>17-09-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. KAUF ; O. SCHREER.** An immersive 3D video-conferencing system using shared virtual team user environment. *Proc. Of the 4th International Conference on Collaborative Environments,* 2002, 105-112